# EUROPEAN PATENT APPLICATION

(11) **EP 2 753 135 A1**
(43) Date of publication of application: **09.07.2014**
(21) Application number: 12832882.0
(22) Date of filing: 22.09.2012
(51) Int. Cl.: H04W 68/02

(54) **PAGING METHOD AND DEVICE**

(30) Priority: 22.09.2011 CN 201110284260
(71) Applicant: Huawei Technologies Co., Ltd., Shenzhen, Guangdong 518129 (CN)
(72) Inventor: XU, Xiaoying, Guangdong 518129 (CN); CHEN, Dong, Guangdong 518129 (CN); ZHOU, Zheng, Guangdong 518129 (CN); XU, Min, Guangdong 518129 (CN)
(74) Representative: Pfenning, Meinig & Partner GbR
(86) International application number: PCT/CN2012/081793
(87) International publication number: WO 2013/041052

(57) **Abstract**

The present invention discloses a method and an apparatus for paging. The method includes: obtaining indication information for indicating a paging range; determining, according to the indication information, a home base station (HNB) that can establish a local bearer with a local gateway (LGW) triggering paging; and sending a second paging message to the HNB, so that the HNB sends a third paging message to a user equipment (UE). The apparatus includes a home base station gateway (HNB GW), a home base station (HNB), and a Serving GPRS Support Node SGSN. According to the method and the apparatus for paging according to embodiments according to the present invention, a home base station that can establish a local bearer with a local gateway trigging paging can be determined by using indication information, and a paging message is sent to the determined home base station. This can prevent a home base station that does not support establishing a local bearer with the local gateway from sending a paging message to a user equipment, thereby decreasing paging messages between the home base station, the home base station gateway, and the user equipment, saving system overhead, and improving system efficiency.

## Description

This application claims priority to Chinese Patent Application No. 201110284260.2, filed with the Chinese Patent Office on September 22, 2011 and entitled "METHOD AND APPARATUS FOR PAGING", which is incorporated herein by reference in its entirety.

### TECHNICAL FIELD

The present invention relates to the communications field, and in particular, to a method and an apparatus for paging in the communications field.

### BACKGROUND

A home base station (Home NodeB, "HNB" for short) may be used to expand a coverage range of a mobile network and to provide more customized services. An HNB may belong to no home or enterprise, and may be connected to a mobile operator's network through a broadband connection. A terminal having an access right to the HNB may access, by using an HNB of a third generation mobile communication technology (3rd-Generation, "3G" for short) or a Long Terminal Evolution (Long Term Evolution, "LTE" for short) system, the mobile operator's network to obtain a service.

An HNB may also be used to deploy a local network in an enterprise or home, so that a user equipment (User Equipment, "UE" for short) accessing the HNB can access the local network deployed by using the home base station, where user data does not need to go through a core network of an operator.

In an existing HNB system architecture, a local gateway (Local GateWay, "LGW" for short) is integrated with an HNB, and the LGW and the HNB have the same address. An HNB supporting local IP (Internet Protocol) access (Local IP Access, "LIPA" for short) can report, in an Initial UE Message, an IP address of the LGW to a Serving GPRS Support Node (Serving GPRS Support Node, "SGSN" for short, where General Packet Radio Service (General Packet Radio Service) is referred to as "GPRS" for short), and provides a Gi/SGi interface for use in LIPA, so as to support associating a correlation ID (identifier) with an internal user-plane channel between the LGW and the HNB.

The LGW integrated with the HNB supports the internal user-plane channel to the HNB, supports deactivating an LIPA packet data network (Packet Data Network, "PDN" for short) connection, and supports sending a first data packet of a UE in an idle state to an SGSN or a security gateway (Security Gateway, "SGW" for short) and buffering a subsequent downlink data packet.

However, in the existing HNB system, all home base stations (HNBs) receiving a paging message send the paging message to a user equipment (UE), resulting in large system overhead.

### SUMMARY

Multiple aspects of the present invention provide a method and an apparatus for paging, which can decrease paging messages and save system overhead.

One aspect of the present invention provides a method for paging, where the method includes: obtaining indication information for indicating a paging range; determining, according to the indication information, a home base station (HNB) that can establish a local bearer with a local gateway (LGW) triggering paging; and sending a second paging message to the HNB, so that the HNB sends a third paging message to a user equipment (UE).

Another aspect of the present invention provides a method for paging, where the method includes: receiving a second paging message sent from a home base station gateway (HNB GW), where the second paging message includes indication information for indicating a paging range; determining, according to the indication information, that a local bearer can be established with a local gateway (LGW) triggering paging; and sending a third paging message to a user equipment (UE).

Another aspect of the present invention provides a method for paging, where the method includes: receiving a downlink data packet sent from a local gateway (LGW); obtaining, according to address information in a packet header of the downlink data packet, indication information for indicating a paging range; and sending a first paging message to a home base station gateway (HNB GW), where the first paging message includes the indication information, so that the HNB GW determines, according to the indication information, an HNB that can establish a local bearer with the LGW, and sends a second paging message to the HNB.

Another aspect of the present invention provides a home base station gateway (HNB GW), where the HNB GW includes: an obtaining module, configured to obtain indication information for indicating a paging range; a determining module, configured to determine, according to the indication information, a home base station (HNB) that can establish a local bearer with a local gateway (LGW) triggering paging; and a sending module, configured to send a second paging message to the HNB, so that the HNB sends a third paging message to a user equipment (UE).

Another aspect of the present invention provides a home base station (HNB), where the HNB includes: a receiving module, configured to receive a second paging message sent from a home base station gateway (HNB GW), where the second paging message includes indication information for indicating a paging range; a determining module, configured to determine, according to the indication information, that a local bearer can be established with a local gateway (LGW) triggering paging; and a sending module, configured to send a third paging message to a user equipment (UE).

Another aspect of the present invention provides a Serving GPRS Support Node SGSN, where the SGSN includes: a receiving module, configured to receive a downlink data packet sent from a local gateway (LGW); an obtaining module, configured to obtain, according to address information in a packet header of the downlink data packet, indication information for indicating a paging range; and a sending module, configured to send a first paging message to a home base station gateway (HNB GW), where the first paging message includes the indication information, so that the HNB GW determines, according to the indication information, an HNB that can establish a local bearer with the LGW, and sends a second paging message to the HNB.

Based on the technical solutions described above, a home base station that does not support establishing a local bearer with a local gateway can be prevented from sending a paging message to a user equipment, thereby decreasing paging messages between the home base station and a home base station gateway, and between the home base station and the user equipmen, saving system overhead, and improving system efficiency.

### BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1A and FIG. 1B are schematic architectural diagrams of an HNB system according to an embodiment of the present invention;
FIG. 2 is a schematic flowchart of a method for paging according to an embodiment of the present invention;
FIG. 3 is another schematic flowchart of a method for paging according to an embodiment of the present invention;
FIG. 4 is a schematic flowchart of a method for paging according to another embodiment of the present invention;
FIG. 5 is a schematic flowchart of a method for paging according to another embodiment of the present invention;
FIG. 6 is a schematic flowchart of a method for paging according to an embodiment of the present invention;
FIG. 7 is a schematic block diagram of an HNB GW according to an embodiment of the present invention;
FIG. 8 is another schematic block diagram of an HNB GW according to an embodiment of the present invention;
FIG. 9 is a schematic block diagram of an HNB according to an embodiment of the present invention; and
FIG. 10 is a schematic block diagram of an SGSN according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

It should be understood that the technical solutions of the present invention are applicable to a variety of communication systems, such as a Global System for Mobile Communications (Global System for Mobile communications, "GSM" for short) system, a Code Division Multiple Access (Code Division Multiple Access, "CDMA" for short) system, a Wideband Code Division Multiple Access (Wideband Code Division Multiple Access, "WCDMA" for short) system, General Packet Radio Service (General Packet Radio Service, "GPRS" for short), a Long Term Evolution (Long Term Evolution, "LTE" for short) system, an LTE Frequency Division Duplex (Frequency Division Duplex, "FDD" for short) system, an LTE Time Division Duplex (Time Division Duplex, "TDD" for short), a Universal Mobile Telecommunications System (Universal Mobile Telecommunication System, "UMTS").

It should also be understood that in the embodiments of the present invention, a user equipment (User Equipment, "UE" for short) may be referred to as a terminal (Terminal), a mobile station (Mobile Station, "MS" for short), a mobile terminal (Mobile Terminal), and the like. The user equipment may communicate with one or more core networks through a radio access network (Radio Access Network, "RAN" for short). For example, the user equipment may be a mobile phone (or referred to as a "cellular" phone), a computer equipped with a mobile terminal, and the like. For example, the user equipment may also be a portable, pocket-sized, handheld, computer built-in, or vehicle-mounted mobile apparatus, which exchange voice and/or data with the radio access network.

In the embodiments of the present invention, a base station may be a base station (Base Transceiver Station, "BTS" for short) in GSM or CDMA, a base station (NodeB, "NB" for short) in WCDMA, or an evolved base station (Evolutional Node B, "eNB or e-NodeB" for short) in LTE, which is not limited in the present invention. However, for the convenience of description, the following embodiments are described by using a home base station (HNB) and a user equipment (UE) as examples.

In addition, the terms "system" and "network" herein may be used interchangeably herein. A term "and/or" herein merely describes an association relationship between associated objects, indicating that three relationships may exist, for example, A and/or B may represent three cases: A exists alone, both A and B exist, and B exists alone. In addition, a symbol "/" herein generally represents that associated objects before and after the symbol are in an "or" relationship.

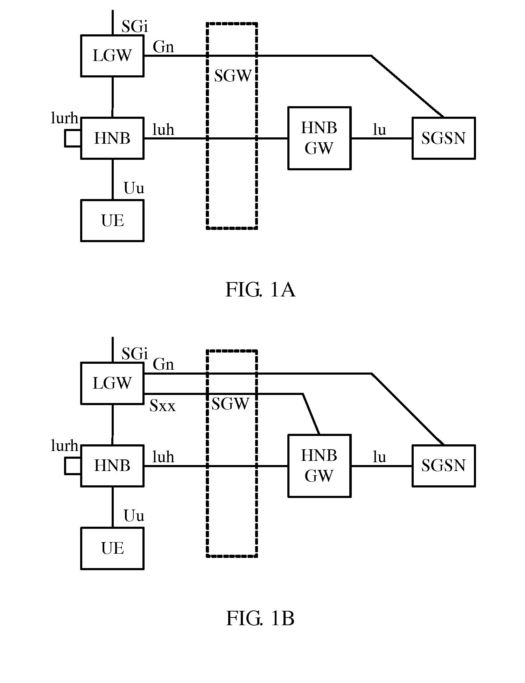

FIG. 1A and FIG. 1B show schematic architectural diagrams of an HNB system according to an embodiment of the present invention. As shown in FIG. 1, an HNB system includes an HNB, a home base station gateway (Home NodeB GateWay, "HNB GW" for short), a Serving GPRS Support Node (Serving GPRS Support Node, "SGSN" for short), a UE, an LGW, and a security gateway (Security GateWay, "SGW" for short), where the LGW is indirectly connected to the HNB GW through the HNB, and the HNB is connected to the HNB GW through an luh interface. However, in an HNB system illustrated in FIG. 1B, an LGW is directly connected to an HNB GW through an Sxx interface. It should be understood that the HNB systems illustrated in FIG. 1A and FIG. 1B are merely used as examples, and the HNB system may also have another architecture. The embodiment of the present invention is not limited thereto.

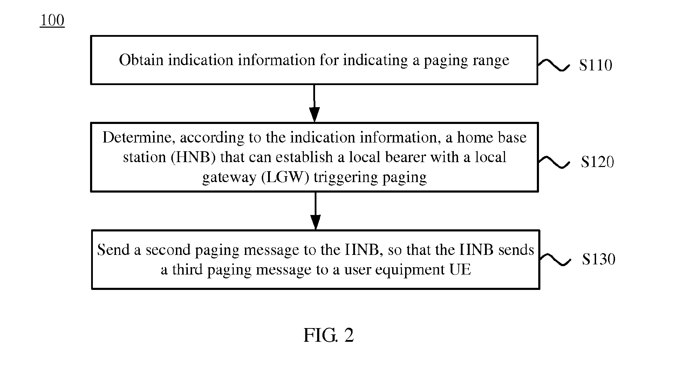

FIG. 2 shows a schematic flowchart of a method 100 for paging according to an embodiment of the present invention. As sown in FIG. 2:
S110: Obtain indication information for indicating a paging range.
S120: Determine, according to the indication information, a home base station (HNB) that can establish a local bearer with a local gateway (LGW) triggering paging.
S130: Send a second paging message to the HNB, so that the HNB sends a third paging message to a user equipment (UE).

In order to reduce signaling overhead of a system, a home base station gateway (HNB GW) may obtain indication information for indicating a paging range first, and then determine, according to the indication information, a home base station (HNB) that can establish a local bearer with a local gateway (LGW) triggering paging, so as to send a second paging message only to the determined HNB, so that the HNB sends a third paging message to a user equipment (UE). This can reduce signaling overhead between the HNB GW and the HNB, and can also reduce air interface paging between the HNB and the UE.

Therefore, in the method for paging according to the embodiment of the present invention, a home base station that can establish a local bearer with a local gateway trigging paging can be determined by using indication information, and a paging message is sent to the determined home base station. This can prevent a home base station that does not support establishing a local bearer with the local gateway from sending a paging message to a user equipment, thereby decreasing paging messages between the home base station, the home base station gateway, and the user equipment, saving system overhead, and improving system efficiency.

In S110, an HNB GW may obtain the indication information according to a paging message sent from an SGSN, or obtain the indication information according to a downlink data packet directly sent from the LGW.

In the embodiment of the present invention, optionally, the indication information includes at least one of an identifier of a local network where the LGW is located, an identifier of the LGW, and an address of the LGW. The identifier is, for example, a local home base station network identifier (Local HNB Network ID, "LHN-ID" for short). The address of the LGW is, for example, an address of the LGW in a local network domain, that is, LGW@LN address, or an address of the LGW in a core network domain, that is, LGW@CN address. The address of the LGW may also be a control-plane address or user-plane address between the LGW and the HNB, or the address of the LGW may also be a control-plane address or user-plane address between the LGW and the HNB GW.

In S120, the HNB GW determines, according to the indication information, the HNB that can establish the local bearer with the LGW. Optionally, the HNB GW determines the HNB according to the indication information, where the HNB supports local IP access LIPA and/or selected IP traffic offload (Selected IP Traffic Offload, "SIPTO" for short), and the HNB can establish the local bearer with the LGW.

Optionally, the HNB GW may determine, according to at least one of the identifier of the local network where the LGW triggering paging is located, the identifier of the LGW, and the address of the LGW that are included in the indication information, and by querying a locally stored HNB information table, an HNB that can establish a local connection to the LGW, and then send a paging message to these HNBs. It should be understood that the HNB information table may include a mapping relationship between the LGW and the HNB that can establish a local bearer with the LGW. It should be further understood that one LGW may establish a local bearer with multiple HNBs. That is, in the HNB information table, one LGW may correspond to multiple HNBs.

For example, the HNB GW may determine the identifier of the LGW according to the address of the LGW triggering paging included in the indication information, so as to search, according to the HNB information table, for an identifier of an HNB corresponding to the identifier of the LGW. An HNB corresponding to these identifiers of the HNBs is the HNB that can establish the local bearer with the LGW triggering paging, where the HNB information table includes a mapping relationship between any one LGW and one or more HNBs that can establish a local bearer with the LGW.

If the HNB GW cannot determine whether the HNB can establish the local bearer with the LGW, the HNB GW may send a paging message to the HNB according to an existing paging procedure, where the paging message may carry the indication information, so that the HNB determines, according to the indication information, whether the HNB can establish the local bearer with the LGW.

In S 130, the HNB GW sends the second paging message to the determined HNB, so that the HNB sends the third paging message to the user equipment (UE).

In the embodiment of the present invention, optionally, the second paging message includes the indication information, so that the HNB sends the third paging message to the UE when determining, according to the indication information, that the local bearer can be established with the LGW.

That is, the HNB GW sends the second paging message to the determined HNB after determining, according to the indication information, the HNB that can establish the local bearer with the LGW, where the second paging message may include the indication information. After receiving the second paging message, the HNB may determine, according to the indication information, whether the local bearer can be establish with the LGW; and if the HNB determines that the local bearer can be established with the LGW, the HNB sends the third paging message to the UE; otherwise, the HNB may end paging. Therefore, the HNB may further prevent initiating unnecessary paging.

In the embodiment of the present invention, optionally, the obtaining, by an HNB GW, indication information for indicating a paging range includes: obtaining a first paging message sent from a Serving GPRS Support Node SGSN, where the first paging message includes the indication information.

Specifically, the HNB GW may first obtain at least one piece of information for representing a paging range, such as an address or name of an LGW that the HNB can access, a capability of supporting LIPA/SIPTO, and an identifier ID of an LHN where the LGW is located, and then store the obtained information locally to form an HNB information table. The HNB GW may obtain the information for representing the paging range in a manner of reporting by the HNB or obtaining from network management. For example, the HNB may, when registering with the HNB GW, report information such as an LHN-ID or L-GW address/name to the HNB GW by using a home base station application part (Home NodeB Application Part, "HNBAP" for short) message. For example, the HNB GW may also obtain the information for representing the paging range according to static configuration information of an operation, administration, and maintenance (Operation Administration Maintenance, "OAM" for short) apparatus.

When receiving the indication information sent from the SGSN, the HNB GW may determine, according to the indication information and the locally stored HNB information table, an HNB to which paging is to be sent, that is, an HNB that can access the L-GW and an HNB that can establish a local bearer with the LGW, where the HNB can support LIPA and/or SIPTO. The HNB GW may determine, according to whether the HNB reports at least one piece of information such as the LHN-ID or L-GW address/name and the LIPA/SIPTO capability, whether the HNB supports LIPA/SIPTO.

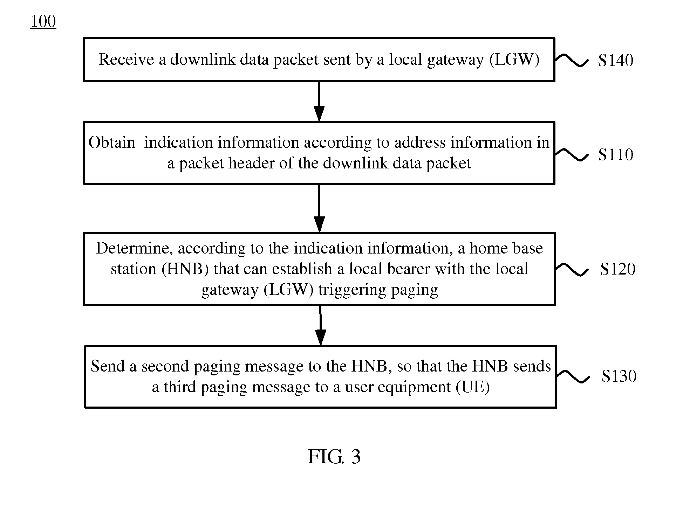

In the embodiment of the present invention, as shown in FIG. 3, the method 100 for paging may further include: S 140: receiving a downlink data packet sent from the LGW.

S110 includes obtaining the indication information according to address information in a packet header of the downlink data packet.

Specifically, when receiving the downlink data packet from the LGW, the HNB GW may analyze a source address, a destination address, a service type, an access point name (Access Point Name, "APN" for short) of a downlink data source packet data network (Packet Data Network, "PDN" for short), a downlink data source data gateway, or other information of the downlink data packet, so as to determine the indication information such as the address or name of the LGW and the identifier LHN-ID of the local network where the LGW is located, thereby determining, according to the indication information and the locally stored HNB information table, the HNB to be paged, that is, the HNB that can access the L-GW and the HNB that can establish the local bearer with the LGW, where the HNB can support LIPA and/or SIPTO.

In the embodiment of the present invention, optionally, when the HNB GW receives a downlink data notification message from the LGW, where the downlink data notification message may carry the indication information such as the address of the LGW, the LHN-ID where the LGW is located or the name of the LGW, the HNB GW may determine, according to the indication information and the locally stored HNB information table, the HNB to be paged, that is, the HNB that can access the LGW and the HNB that can establish the local bearer with the LGW.

Therefore, in the method for paging according to the embodiment of the present invention, a home base station that can establish a local bearer with a local gateway trigging paging can be determined by using indication information, and a paging message is sent to the determined home base station. This can prevent a home base station that does not support establishing a local bearer with the local gateway from sending a paging message to a user equipment, thereby decreasing paging messages between the home base station, the home base station gateway, and the user equipment, saving system overhead, and improving system efficiency.

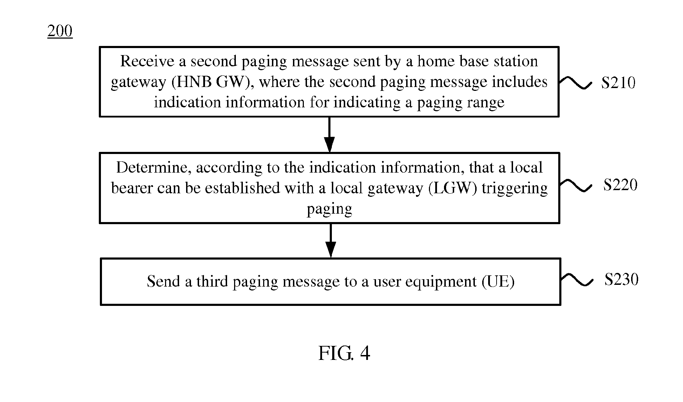

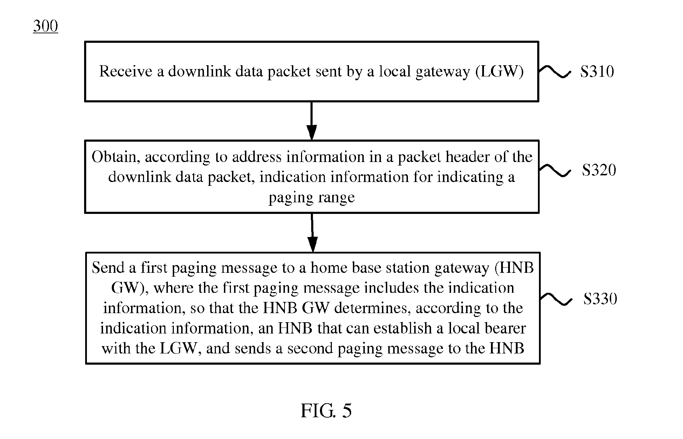

A method for paging according to the embodiments of the present invention is described above in detail from the point of a home base station gateway (HNB GW) with reference to FIG. 2 and FIG. 3. The following describes a method for paging according to an embodiment of the present invention respectively from the point of a home base station (HNB) and a Serving GPRS Support Node SGSN with reference to FIG. 4 and FIG. 5.

As shown in FIG. 4, a method 200 for paging according to an embodiment of the present invention may be as follows:
S210: An HNB receives a second paging message sent from a home base station gateway (HNB GW), where the second paging message includes indication information for indicating a paging range.
S220: The HNB determines, according to the indication information, that a local bearer can be established with a local gateway (LGW) triggering paging.
S230: The HNB sends a third paging message to a user equipment (UE).

In the embodiment of the present invention, optionally, the second paging message is a message sent from the HNB GW according to a first paging message from a Serving GPRS Support Node SGSN, where the first paging message includes the indication information.

In the embodiment of the present invention, optionally, the second paging message is a message sent from the HNB GW according to a downlink data packet from the LGW, and the indication information is determined by the LGW according to address information in a packet header of the downlink data packet.

In the embodiment of the present invention, optionally, the indication information includes at least one of an identifier of a local network where the LGW is located, an identifier of the LGW, and an address of the LGW.

Therefore, in the method for paging according to the embodiment of the present invention, a home base station that can establish a local bearer with a local gateway trigging paging can be determined by using indication information, and a paging message is sent to the determined home base station. This can prevent a home base station that does not support establishing a local bearer with the local gateway from sending a paging message to a user equipment, thereby decreasing paging messages between the home base station and a home base station gateway, and between the home base station and the user equipmen, saving system overhead, and improving system efficiency.

As shown in FIG. 5, a method 300 for paging according to an embodiment of the present invention may be as follows:
S310: An SGSN receives a downlink data packet sent from a local gateway (LGW).
S320: The SGSN obtains, according to address information in a packet header of the downlink data packet, indication information for indicating a paging range.
S330: The SGSN sends a first paging message to a home base station gateway (HNB GW), where the first paging message includes the indication information, so that the HNB GW determines, according to the indication information, an HNB that can establish a local bearer with the LGW, and sends a second paging message to the HNB.

In S320, when receiving the downlink data packet from the LGW, the SGSN may analyze a source address, a destination address, a service type, an APN of a downlink data source PDN, a downlink data source gateway, or other information of the downlink data packet, so as to obtain the indication information such as an address or name of the LGW, and an identifier LHN-ID of a local network where the LGW is located, thereby sending the indication information to the HNB GW by using the first paging message.

In the embodiment of the present invention, optionally, the second paging message includes the indication information, so that the HNB sends the third paging message to the UE when determining, according to the indication information, that the local bearer can be established with the LGW.

In the embodiment of the present invention, optionally, the indication information includes at least one of an identifier of a local network where the LGW is located, an identifier of the LGW, and an address of the LGW.

Therefore, in the method for paging according to the embodiment of the present invention, a home base station that can establish a local bearer with a local gateway trigging paging can be determined by using indication information, and a paging message is sent to the determined home base station. This can prevent a home base station that does not support establishing a local bearer with the local gateway from sending a paging message to a user equipment, thereby decreasing paging messages between the home base station, the home base station gateway, and the user equipment, saving system overhead, and improving system efficiency.

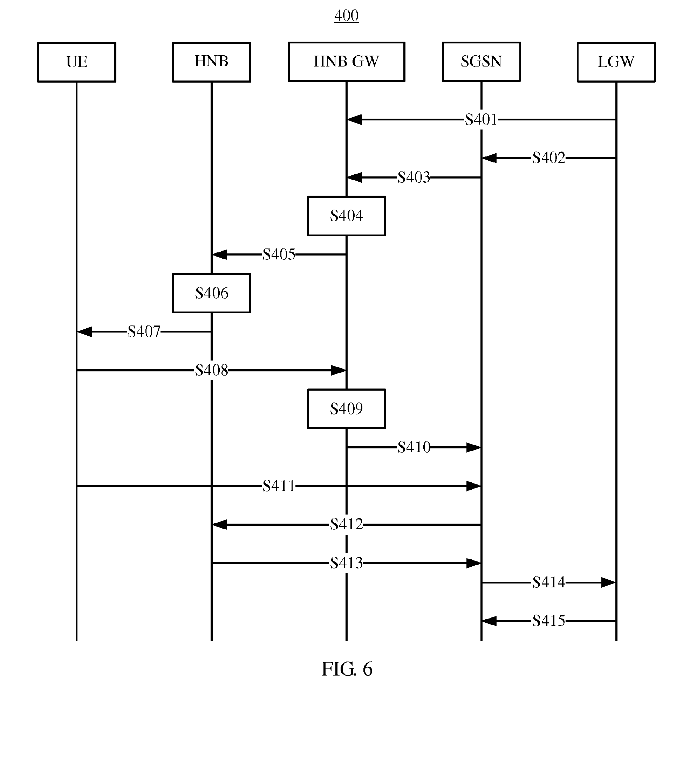

FIG. 6 shows a schematic flowchart of a method 400 for paging according to an embodiment of the present invention. As shown in FIG. 6, an HNB GW may obtain indication information according to a downlink data packet sent from an LGW, and then determine an HNB to which paging is sent. In this case, the method 400 starts from S401, and the procedure goes to S404 to S410, and then to S412 to S415. The HNB GW may also obtain indication information according to a paging message sent from an SGSN, and then determine the HNB to which paging is sent. In this case, the method starts from S402, and the procedure goes to S403 to S407, and then to S411 to S415.

S401: An LGW sends a downlink data packet to an HNB GW.

S402: The LGW sends a downlink data packet to an SGSN.

S403: The SGSN obtains indication information according to the downlink data packet, and sends a first paging message to the HNB GW, where the first paging message includes the indication information.

S404: When the HNB GW receives the downlink data packet sent from the LGW, the HNB GW may obtain indication information according to address information in a packet header of the downlink data packet, and may determine, according to the indication information, a home base station (HNB) that can establish a local bearer with the LGW; and when the HNB GW receives the first paging message sent from the SGSN, the HNB GW may obtain the indication information according to the first paging message, and may determine, according to the indication information, a home base station (HNB) that can establish a local bearer with the LGW.

S405: The HNB GW sends a second paging message to the HNB, where, optionally, the second paging message includes the indication information.

S406: Optionally, the HNB determines, according to the indication information included in the second paging message, whether a local bearer can be established with a local gateway (LGW) triggering paging; and if the local bearer cannot be established with the LGW, the procedure ends; otherwise, the procedure goes to S407.

S407: The HNB sends a third paging message to a UE.

S408: The UE sends a paging response message to the HNB GW, where a service type is Service type = Paging Response.

S409: After receiving the paging response message, the HNB sets the service type to Service type = Data in case that the paging response is discarded when an exception occurs on the SGSN.

S410: The HNB GW sends the paging response message to the SGSN.

S411: The UE sends a paging response message to the SGSN, where the HNB may carry an address of the LGW in a radio access network application part (Radio Access Network Application Part, "RANAP" for short) message, so as to send the address to the SGSN.

S412: The SGSN sends a radio access bearer (Radio Access Bearer, "RAB" for short) assignment request message to the HNB, so as to send the address of the LGW and a tunnel endpoint identifier (Tunnel Endpoint Identifier, "TEID" for short) to the HNB.

S413: The HNB sends an RAB assignment response message to the SGSN, so as to send a downlink user-plane address of the HNB and the TEID to the SGSN.

S414: The SGSN sends an update packet data protocol (Packet Data Protocol, "PDP" for short) context request message to the LGW, so as to notify the LGW of user-plane bearer information of the HNB.

S415: The LGW sends an update PDP context response message to the SGSN.

It should be understood that the sequence numbers of the processes do not indicate an execution sequence, and the execution sequence of the processes should be determined according to the functions and internal logic thereof, and should not set any limit to an implementation process of the embodiment of the present invention.

Therefore, in the method for paging according to the embodiment of the present invention, a home base station that can establish a local bearer with a local gateway trigging paging can be determined by using indication information, and a paging message is sent to the determined home base station. This can prevent a home base station that does not support establishing a local bearer with the local gateway from sending a paging message to a user equipment, thereby decreasing paging messages between the home base station, the home base station gateway, and the user equipment, saving system overhead, and improving system efficiency.

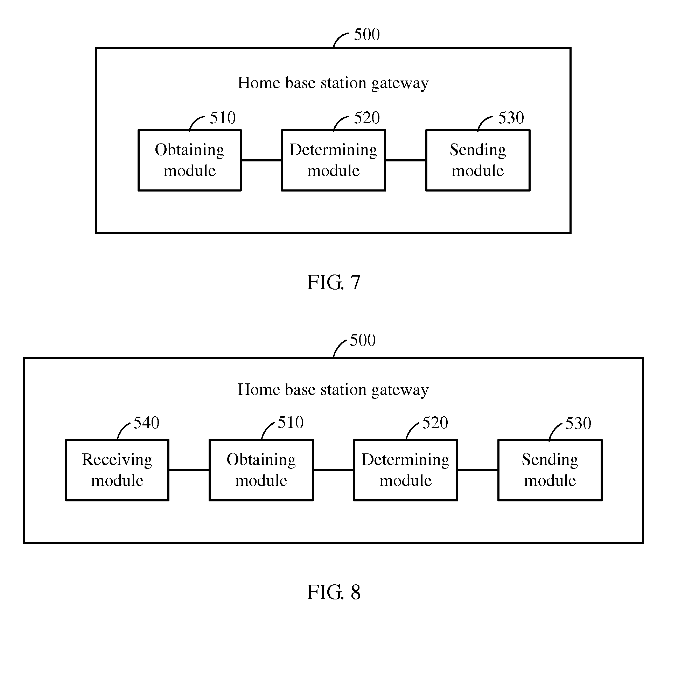

The method for paging according to the embodiments of the present invention is described in detail above with reference to FIG. 1 to FIG. 6. The following describes an apparatus according to an embodiment of the present invention in detail with reference to FIG. 7 to FIG. 10. The apparatus includes a home base station gateway (HNB GW), a home base station (HNB), and a Serving GPRS Support Node SGSN.

FIG. 7 shows a schematic block diagram of an HNB GW 500 according to an embodiment of the present invention. As shown in FIG. 7, the home base station gateway (HNB GW) 500 includes an obtaining module 510, a determining module 520, and a sending module 530.

The obtaining module 510 is configured to obtain indication information for indicating a paging range.

The determining module 520 is configured to determine, according to the indication information, a home base station (HNB) that can establish a local bearer with a local gateway (LGW) triggering paging.

The sending module 530 is configured to send a second paging message to the HNB, so that the HNB sends a third paging message to a user equipment (UE).

Therefore, according to the home base station gateway for paging according to the embodiment of the present invention, a home base station that can establish a local bearer with a local gateway trigging paging can be determined by using indication information, and a paging message is sent to the determined home base station. This can prevent a home base station that does not support establishing a local bearer with the local gateway from sending a paging message to a user equipment, thereby decreasing paging messages between the home base station, the home base station gateway, and the user equipment, saving system overhead, and improving system efficiency.

In the embodiment of the present invention, optionally, the obtaining module 510 is further configured to obtain a first paging message sent from a Serving GPRS Support Node SGSN, where the first paging message includes the indication information.

In the embodiment of the present invention, optionally, as shown in FIG. 8, the HNB GW 500 further includes a receiving module 540, configured to receive a downlink data packet sent from the LGW.

The obtaining module 510 is further configured to obtain the indication information according to address information in a packet header of the downlink data packet.

In the embodiment of the present invention, optionally, the second paging message sent from the sending module 530 includes the indication information, so that the HNB sends the third paging message to the UE when determining, according to the indication information, that the local bearer can be established with the LGW.

In the embodiment of the present invention, optionally, the indication information obtained by the obtaining module 510 includes at least one of an identifier of local network where the LGW is located, an identifier of the LGW, and an address of the LGW.

In the embodiment of the present invention, optionally, the determining module 520 is further configured to determine the HNB according to the indication information, where the HNB supports local IP access LIPA and/or selected IP traffic offload SIPTO, and the HNB can establish the local bearer with the LGW.

The home base station gateway 500 according to the embodiment of the present invention may correspond to the home base station gateway (HNB GW) in the embodiments of the present invention, and the above and other operations and/or functions of modules in the home base station gateway 500 are respectively used to implement corresponding procedures in the methods 100 to 300 in FIG. 2 to FIG. 6, which will not be described repeatedly herein for the sake of brevity.

Therefore, according to the home base station gateway for paging according to the embodiment of the present invention, a home base station that can establish a local bearer with a local gateway trigging paging can be determined by using indication information, and a paging message is sent to the determined home base station. This can prevent a home base station that does not support establishing a local bearer with the local gateway from sending a paging message to a user equipment, thereby decreasing paging messages between the home base station, the home base station gateway, and the user equipment, saving system overhead, and improving system efficiency.

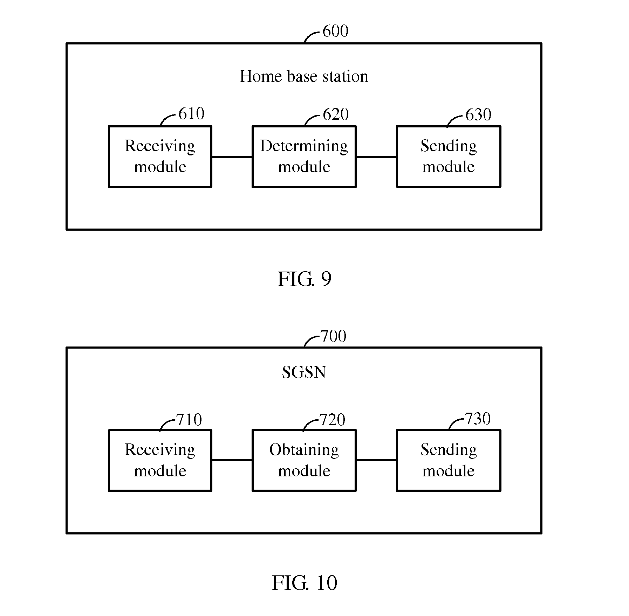

FIG. 9 shows a schematic block diagram of an HNB 600 according to an embodiment of the present invention. As shown in FIG. 9, the HNB 600 includes a receiving module 610, a determining module 620, and a sending module 630.

The receiving module 610 is configured to receive a second paging message sent from a home base station gateway (HNB GW), where the second paging message includes indication information for indicating a paging range.

The determining module 620 is configured to determine, according to the indication information, that a local bearer can be established with a local gateway (LGW) triggering paging.

The sending module 630 is configured to send a third paging message to a user equipment (UE).

In the embodiment of the present invention, optionally, the second paging message received by the receiving module 610 is a message sent from the HNB GW according to a first paging message from a Serving GPRS Support Node SGSN, where the first paging message includes the indication information.

In the embodiment of the present invention, optionally, the second paging message received by the receiving module 610 is a message sent from the HNB GW according to a downlink data packet from the LGW, and the indication information is determined by the LGW according to address information in a packet header of the downlink data packet.

In the embodiment of the present invention, optionally, the indication information includes at least one of an identifier of a local network where the LGW is located, an identifier of the LGW, and an address of the LGW.

The home base station 600 according to the embodiment of the present invention may correspond to the home base station (HNB) in the embodiments of the present invention, and the above and other operations and/or functions of modules in the home base station 600 are respectively used to implement corresponding procedures in the methods 100 to 300 in FIG. 2 to FIG. 6, which will not be described repeatedly herein for the sake of brevity.

Therefore, according to the home base station for paging according to the embodiment of the present invention, a home base station that can establish a local bearer with a local gateway trigging paging can be determined by using indication information, and a paging message is sent to the determined home base station. This can prevent a home base station that does not support establishing a local bearer with the local gateway from sending a paging message to a user equipment, thereby decreasing paging messages between the home base station, the home base station gateway, and the user equipment, saving system overhead, and improving system efficiency.

FIG. 10 shows a schematic block diagram of an SGSN 700 according to an embodiment of the present invention. As shown in FIG. 10, the SGSN 700 includes a receiving module 710, an obtaining module 720, and a sending module 730.

The receiving module 710 is configured to receive a downlink data packet sent from a local gateway (LGW).

The obtaining module 720 is configured to obtain, according to address information in a packet header of the downlink data packet, indication information for indicating a paging range.

The sending module 730 is configured to send a first paging message to a home base station gateway (HNB GW), where the first paging message includes the indication information, so that the HNB GW determines, according to the indication information, an HNB that can establish a local bearer with the LGW, and sends a second paging message to the HNB.

In the embodiment of the present invention, optionally, the second paging message includes the indication information, so that the HNB sends a third paging message to the UE when determining, according to the indication information, that the local bearer can be established with the LGW.

In the embodiment of the present invention, optionally, the indication information obtained by the obtaining module 720 includes at least one of an identifier of local network where the LGW is located, an identifier of the LGW, and an address of the LGW.

The Serving GPRS Support Node 700 according to the embodiment of the present invention may correspond to the SGSN in the embodiments of the present invention, and the above and other operations and/or functions of modules in the SGSN 700 are respectively used to implement corresponding procedures in the methods 100 to 300 in FIG. 2 to FIG. 6, which will not be described repeatedly herein for the sake of brevity.

Therefore, according to the Serving GPRS Support Node for paging according to the embodiment of the present invention, a home base station that can establish a local bearer with a local gateway trigging paging can be determined by using indication information, and a paging message is sent to the determined home base station. This can prevent a home base station that does not support establishing a local bearer with the local gateway from sending a paging message to a user equipment, thereby decreasing paging messages between the home base station, the home base station gateway, and the user equipment, saving system overhead, and improving system efficiency.

It should also be understood that the embodiment of the present invention is applicable to an LTE system, and in the LTE system, an eNB may correspond to the HNB in the embodiment of the present invention.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on the particular applications and design constraint conditions of the technical solution. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiments are merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and the parts displayed as units may or may not be physical units, may be located in one position, or may be distributed on a plurality of network units. Some or all of the units may be selected to achieve the objective of the solution of the embodiment of the present invention according to actual needs.

In addition, functional units in the embodiments of the present invention may be integrated into one processing unit, or each of the units may exist alone physically, or two or more units may be integrated into one unit. The integrated units may be implemented in a form of hardware, or may be implemented in a form of a software functional unit.

When the integrated units are implemented in a form of a software functional unit and sold or used as an independent product, the integrated units may be stored in a computer-readable storage medium. Based on such an understanding, the technical solutions of the present invention essentially, or the part contributing to the prior art, or all or a part of the technical solutions may be implemented in a form of a software product. The computer software product is stored in a storage medium and includes several instructions for instructing a computer device (which may be a personal computer, a server, or a network device) to perform all or a part of the steps of the methods described in the embodiments of the present invention. The foregoing storage medium includes: any mediums that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific embodiments of the present invention, but are not intended to limit the protection scope of the present invention. Any equivalent modification or replacement readily figured out by a person skilled in the art within the technical scope of the present invention shall fall within the protection scope of the present invention. Therefore, the protection scope of the present invention shall be subject to the protection scope of the claims.

## Claims

1. A method for paging, comprising:
obtaining indication information for indicating a paging range;
determining, according to the indication information, a home base station (HNB) that can establish a local bearer with a local gateway (LGW) triggering paging; and
sending a second paging message to the HNB, so that the HNB sends a third paging message to a user equipment (UE).

2. The method according to claim 1, wherein the obtaining indication information for indicating a paging range comprises:
obtaining a first paging message sent from a Serving GPRS Support Node (SGSN), wherein the first paging message comprises the indication information.

3. The method according to claim 1, wherein the method further comprises:
receiving a downlink data packet sent from the LGW; and
the obtaining indication information for indicating a paging range comprises:
obtaining the indication information according to address information in a packet header of the downlink data packet.

4. The method according to claim 1, wherein the second paging message comprises the indication information, so that the HNB sends the third paging message to the UE when determining, according to the indication information, that the local bearer can be established with the LGW.

5. The method according to any one of claims 1 to 4, wherein the indication information comprises at least one of an identifier of a local network where the LGW is located, an identifier of the LGW, and an address of the LGW.

6. The method according to claim 1, wherein the determining a home base station (HNB) that can establish the local bearer with a local gateway (LGW) triggering paging comprises:
determining the HNB according to the indication information, wherein the HNB supports local IP access (LIPA) and/or selected IP traffic offload (SIPTO), and the HNB can establish the local bearer with the LGW.

7. A method for paging, comprising:
receiving a second paging message sent from a home base station gateway (HNB GW), wherein the second paging message comprises indication information for indicating a paging range;
determining, according to the indication information, that a local bearer can be established with a local gateway (LGW) triggering paging; and
sending a third paging message to a user equipment (UE).

8. The method according to claim 7, wherein the second paging message is a message sent from the HNB GW according to a first paging message from a Serving GPRS Support Node (SGSN), and the first paging message comprises the indication information.

9. The method according to claim 7, wherein the second paging message is a message sent from the HNB GW according to a downlink data packet from the LGW, and the indication information is determined by the LGW according to address information in a packet header of the downlink data packet.

10. The method according to any one of claims 7 to 9, wherein the indication information comprises at least one of an identifier of a local network where the LGW is located, an identifier of the LGW, and an address of the LGW.

11. A method for paging, comprising:
receiving a downlink data packet sent from a local gateway (LGW);
obtaining, according to address information in a packet header of the downlink data packet, indication information for indicating a paging range; and
sending a first paging message to a home base station gateway (HNB GW), wherein the first paging message comprises the indication information, so that the HNB GW determines, according to the indication information, an HNB that can establish a local bearer with the LGW, and sends a second paging message to the HNB.

12. The method according to claim 11, wherein the second paging message comprises the indication information, so that the HNB sends a third paging message to a UE when determining, according to the indication information, that the local bearer can be established with the LGW.

13. The method according to claim 11 to 12, wherein the indication information comprises at least one of an identifier of a local network where the LGW is located, an identifier of the LGW, and an address of the LGW.

14. A home base station gateway (HNB GW), comprising:
an obtaining module, configured to obtain indication information for indicating a paging range;
a determining module, configured to determine, according to the indication information, a home base station (HNB) that can establish a local bearer with a local gateway (LGW) triggering paging; and
a sending module, configured to send a second paging message to the HNB, so that the HNB sends a third paging message to a user equipment (UE).

15. The HNB GW according to claim 14, wherein the obtaining module is further configured to:
obtain a first paging message sent from a Serving GPRS Support Node (SGSN), wherein the first paging message comprises the indication information.

16. The HNB GW according to claim 14, wherein the HNB GW further comprises:
a receiving module, configured to receive a downlink data packet sent from the LGW; and
the obtaining module is further configured to obtain the indication information according to address information in a packet header of the downlink data packet.

17. The HNB GW according to claim 14, wherein the second paging message sent from the sending module comprises the indication information, so that the HNB sends the third paging message to the UE when determining, according to the indication information, that the local bearer can be established with the LGW.

18. The HNB GW according to any one of claims 14 to 17, wherein the indication information obtained by the obtaining module comprises at least one of an identifier of a local network where the LGW is located, an identifier of the LGW, and an address of the LGW.

19. The HNB GW according to claim 14, wherein the determining module is further configured to:
determine the HNB according to the indication information, wherein the HNB supports local IP access (LIPA) and/or selected IP traffic offload (SIPTO), and the HNB can establish the local bearer with the LGW.

20. A home base station (HNB), comprising:
a receiving module, configured to receive a second paging message sent from a home base station gateway (HNB GW), wherein the second paging message comprises indication information for indicating a paging range;
a determining module, configured to determine, according to the indication information, that a local bearer can be established with a local gateway (LGW) triggering paging; and
a sending module, configured to send a third paging message to a user equipment (UE).

21. The HNB according to claim 20, wherein the second paging message received by the receiving module is a message sent from the HNB GW according to a first paging message from a Serving GPRS Support Node (SGSN), and the first paging message comprises the indication information.

22. The HNB according to claim 20, wherein the second paging message received by the receiving module is a message sent from the HNB GW according to a downlink data packet from the LGW, and the indication information is determined by the LGW according to address information in a packet header of the downlink data packet.

23. The HNB according to any one of claims 20 to 22, wherein the indication information comprises at least one of an identifier of a local network where the LGW is located, an identifier of the LGW, and an address of the LGW.

24. A Serving GPRS Support Node (SGSN), comprising:
a receiving module, configured to receive a downlink data packet sent from a local gateway (LGW);
an obtaining module, configured to obtain, according to address information in a packet header of the downlink data packet, indication information for indicating a paging range; and
a sending module, configured to send a first paging message to a home base station gateway (HNB GW), wherein the first paging message comprises the indication information, so that the HNB GW determines, according to the indication information, an HNB that can establish a local bearer with the LGW, and sends a second paging message to the HNB.

25. The SGSN according to claim 24, wherein the second paging message comprises the indication information, so that the HNB sends a third paging message to a UE when determining, according to the indication information, that the local bearer can be established with the LGW.

26. The SGSN according to claim 24 to 25, wherein the indication information obtained by the obtaining module comprises at least one of an identifier of a local network where the LGW is located, an identifier of the LGW, and an address of the LGW.
